Europäisches Patentamt

European Patent Office

Office européen des brevets

(19)

(11) Numéro de publication: **0 396 448**
**A1**

## (12) DEMANDE DE BREVET EUROPEEN

(21) Numéro de dépôt: **90401069.1**

(22) Date de dépôt: **20.04.90**

(51) Int. Cl.5: **C01B 21/064**

(30) Priorité: **02.05.89 FR 8905810**

(43) Date de publication de la demande:
**07.11.90 Bulletin 90/45**

(84) Etats contractants désignés:
**AT BE CH DE DK ES FR GB GR IT LI LU NL SE**

(71) Demandeur: **RHONE POULENC CHIMIE**
**25 Quai Paul Doumer**
**F-92408 Courbevoie Cédex(FR)**

(72) Inventeur: **Iltis, Alain**
**13, rue des Noyers**
**F-93300 Aubervillers(FR)**
Inventeur: **Magnier, Claude**
**3, rue des Chaufourniers**
**F-75019 Paris(FR)**

(74) Mandataire: **Dubruc, Philippe**
**RHONE-POULENC CHIMIE Service Brevets**
**Chimie 25, quai Paul-Doumer**
**F-92408 Courbevoie Cédex(FR)**

(54) **Nitrure de bore amorphe ou turbostratique, notamment à morphologie sphérique et son procédé de préparation.**

(57) L' invention concerne un nitrure de bore présentant une structure amorphe ou turbostratique et une morphologie sphérique.

Le procédé d'obtention du produit de l'invention est caractérisé en ce qu'après la synthèse du nitrure de bore on soumet celui-ci à une calcination sous vide.

EP 0 396 448 A1

# NITRURE DE BORE AMORPHE OU TURBOSTRATIQUE NOTAMMENT A MORPHOLOGIE SPHERIQUE ET SON PROCEDE DE PREPARATION

La présente invention concerne un nitrure de bore amorphe ou turbostratique, à morphologie sphérique notamment et son procédé de préparation.

Le nitrure de bore est un produit qui industriellement peut être utilisé par exemple sous forme de poudre en tant que lubrifiant ou mis en forme pour être employé comme isolant ou réfractaire.

D'un point de vue industriel, il est naturellement évident que l'on a intérêt à disposer de poudres de nitrure de bore dont la densité apparente lors de la mise en forme soit la plus élevée possible.

Il se trouve par ailleurs que les poudres de nitrure de bore directement issues de la synthèse de ce produit, en particulier dans la synthèse en phase gazeuse à partir de $BCl_3$, sont généralement inutilisables telles quelles compte tenu de leur grande réactivité vis-à-vis de l'atmosphère ou de l'humidité. De plus ces poudres contiennent de l'oxygène. Cet élément lorsqu'il est en quantité trop importante est gênant pour le frittage. Il peut aussi nuire aux propriétés de la pièce finie. Il convient donc de contrôler sa quantité.

Pour remédier à ces problèmes, on fait généralement subir aux poudres un traitement thermique à haute température.

Malheureusement un tel traitement thermique a pour conséquence de faire évoluer la structure du nitrure de bore. C'est ainsi que celui-ci, notamment lorsqu'il est issu d'une synthèse en phase gazeuse, voit sa structure évoluer de la phase amorphe ou turbostratique aux phases mesographitique et graphitique. On obtient alors un produit présentant une morphologie en plaquettes. Or, comme cela est connu, une telle morphologie entraîne une densité tassée faible pour le produit et donc de mauvaises propriétés de dispersion. De plus cette morphologie peut aussi gêner le frittage sous pression à cause de la croissance anisotrope du produit dans ces conditions.

On voit qu'un problème se pose puisque le traitement thermique entraîne différents effets de tendances inverses sur le produit et que l'on en est réduit à se contenter d'un compromis.

Le premier objet de l'invention est donc un nitrure de bore à densité tassée élevée, de bonne dispersibilité et à faible teneur en oxygène.

Le second objet de l'invention est un procédé permettant d'obtenir un tel nitrure de bore.

Dans ce but selon un premier mode de réalisation le nitrure de bore de l'invention présente une structure amorphe ou turbostratique une teneur en oxygène d'au plus 10 % et il est exempt de carbone.

Selon un second mode de réalisation, le nitrure de bore de l'invention présente une structure amorphe ou turbostratique et une morphologie sphérique.

Enfin le procédé selon l'invention de préparation d'un nitrure de bore est caractérisé en ce qu'après la synthèse du nitrure de bore on soumet celui-ci à une calcination sous vide.

D'autres caractéristiques et avantages de l'invention apparaîtront plus clairement à la lecture de la description et des dessins annexés dans lesquels :

-la figure 1 est un spectre rayons X d'un produit turbostratique selon l'invention,

-la figure 2 est un spectre rayons X d'un produit de l'art antérieur.

Comme on l'a vu plus haut on peut distinguer deux modes de réalisation du produit de l'invention.

Selon le premier mode, le nitrure de bore présente une structure amorphe ou turbostratique.

Le nitrure de bore est de plus caractérisé par sa teneur en oxygène et en carbone.

Sa teneur en oxygène est d'au plus 10 % en poids. Il est à noter que selon des variantes préférentielles cette teneur peut être égale ou inférieure à 5% et plus particulièrement égale ou inférieure à 1,5%.

En ce qui concerne le carbone, le produit de l'invention et notamment selon le premier mode de réalisation en est substantiellement exempt. Par substantiellement exempt, on entend une teneur en carbone inférieure à 1000 ppm plus particulièrement d'au plus 300 ppm et encore plus particulièrement d'au plus 100 p.p.m.

Par ailleurs, selon une autre variante avantageuse de l'invention le nitrure de bore présente une morphologie sphérique.

Par morphologie sphérique, on entend que les grains ou particules constituant le produit ont l'aspect sphérique, les grains ou particules considérés ici étant des objets de taille inférieure ou égale au micron.

Dans le cadre du deuxième mode de réalisation de l'invention le nitrure de bore présente de même une structure amorphe ou turbostratique combinée avec une morphologie sphérique.

Selon des variantes de ce second mode, la teneur en oxygène peut être d'au plus 10 %, préférentiellement d'au plus 5% et plus particulièrement d'au plus 1,5%.

De même que dans le cas du premier mode de réalisation, le produit de ce second mode peut être aussi exempt de carbone au même sens qu'indiqué plus haut.

Les produits selon les deux modes de réalisation décrits ci-dessus présentent en outre des caractéristiques communes.

Tout d'abord ils sont constitués de particules ou grains submicroniques. Généralement la taille de ces particules est d'au plus 1μm et plus particulièrement d'au plus 0,3 μm Cette taille est déterminée par analyse de microscopie électronique.

Pour les produits sphériques, ces grains ou particules sont donc de morphologie sphérique et sont constitués de cristallites plus petits. Ces cristallites présentent généralement une valeur de Lc d'au plus 15 nm, plus particulièrement d'au plus 10 nm. La taille de ces cristallites suivant l'axe a est du même ordre de grandeur que celle de la valeur de Lc.

On rappelle que la valeur Lc correspond à la distance moyenne perpendiculaire à l'axe d'empilement sur laquelle on ne constate aucun défaut. Elle est mesurée par étude cristallographique et mesure de la largeur de la raie (002).

Par ailleurs, les produits de l'invention présentent une teneur en impuretés métalliques, notamment du type alcalino-terreux et Al, inférieure à 100 p.p.m.

Ils présentent aussi une densité absolue déterminée au picnomètre à hélium d'au plus 2 g/cm³, et généralement comprise entre 1,6 et 1,9 g/cm³.

Une autre caractéristique particulièrement intéressante de ces produits est leur densité tassée.

C'est ainsi qu'ils présentent une densité tassée à sec d'au moins 0,35 g/cm³. Cette densité peut être d'environ 0,4 g/cm³. On rappellera ici que pour les produits de l'art antérieur cette densité est généralement inférieure à 0,3 g/cm³.

Cette densité tassée est mesurée de la manière suivante : On place environ 1 g de poudre dans une éprouvette de diamètre 1 cm. On centrifuge ensuite l'ensemble à 3000 t/mn pendant 10 mn. Après la centrifugation, on mesure la hauteur occupée par la poudre, ce qui donne accès à la densité tassée à sec.

Le nitrure de bore de l'invention présente aussi en général une surface spécifique comprise entre 8 et 300 m²/g, et plus particulièrement entre 8 et 100 m²/g.

Enfin les produits de l'invention présentent un certain nombre de propriétés intéressantes.

Ainsi, la poudre de nitrure de bore selon l'invention est stable dans l'eau. Cette stabilité peut être appréciée en suivant l'évolution du pH du milieu lorsque la poudre est mise dans l'eau à la température ambiante dans des conditions de dilution importante de l'ordre de 0,1% en masse. Dans le cas d'un produit instable, le pH évolue d'une manière importante et très rapidement, d'autre part la solution devient laiteuse et on observe l'apparition d'un gel . Dans le cas d'un produit parfaitement stable, on ne note par contre aucune évolution du pH dans le temps et aucun changement d'aspect de la solution.

Par ailleurs, le produit de l'invention est stable vis-à-vis de l'oxygène. On entend par là que ce produit reprend une quantité d'oxygène faible, généralement inférieure à 1% (pourcentage massique). Cette reprise en oxygène peut se mesurer selon les méthodes suivantes.

Ainsi, au bout de 4 mois de stockage à l'air, cette reprise est inférieure à 1%. Il en est de même à la suite d'une oxydation par voie sèche à 400°C pendant 10 heures ou à la suite d'un étuvage humide à 90°C pendant 24 heures.

Enfin, les pièces crues formées à partir du produit de l'invention sont isotropes, contrairement à celles obtenues à partir de nitrure de bore graphitique dans lesquelles on observe une orientation préférentielle des plaquettes dans une direction perpendiculaire à la direction de pressage.

L'invention permet en outre l'obtention de deux gammes de produits qui, outre les caractéristiques et propriétés communes aux deux modes de réalisation décrits ci-dessus, sont différentes par la chimie de surface des produits.

Dans un premier cas, on peut obtenir des produits qui seront appelés pour le reste de la description produits "hydrophobes".

Ces produits hydrophobes se caractérisent essentiellement par leur pH.

Ce pH est mesuré de la manière suivante :

On prépare un mélange eau-éthanol dans les proportions respectives de 30 et 70% en volume. On ajuste la valeur du pH de ce mélange à 7 ± 1 par addition de soude. On introduit ensuite 0,3 g de nitrure de bore dans 20 cm³ du mélange. On note la valeur du pH et on ajoute 0,5 à cette valeur, ceci pour se ramener au cas où on effectuerait la mesure dans l'eau pure; le mélange eau-éthanol étant en effet utilisé parce que la dispersion du nitrure de bore y est plus facile que dans l'eau pure.

Les produits hydrophobes ont un pH, tel que déterminé dans les conditions ci-dessus, qui est nettement basique. On entend par là une valeur d'au moins 8, de préférence au moins 8,5.

Ces mêmes produits hydrophobes se caractérisent aussi par la présence d'ions ammonium. Cette présence est mise en évidence par dosage avec une électrode spécifique dans une barbotine aqueuse du produit acidifiée à pH 2. Auquel cas la teneur en ion ammonium est de l'ordre de 1% en masse.

Sans vouloir être lié par une théorie, cette chimie de surface pourrait être due à la présence de quantités importantes de groupements amines à la surface des produits. Les spectres infrarouges de ces produits montrent la présence de groupements NH.

Comme autre caractéristique des produits hydrophobes, on peut mentionner une forte tension de surface. Cette tension de surface se détermine en considérant la mouillabilité du produit par des milieux de tension de surface connues, en l'occurence par des mélanges eau-éthanol de proportions respectives en ces éléments variables. Les produits hydrophobes ont une tension de surface supérieure à 40 dyne-cm$^{-1}$.

Enfin, les produits hydrophobes présentent un certain nombre de propriétés qui leur sont propres.

Ainsi, les produits hydrophobes présentent une bonne dispersibilité dans l'eau. Cette dispersibilité peut être appréciée par la teneur maximale en extrait sec que peuvent présenter des barbotines préparées à partir du produit. C'est ainsi que le produit hydrophobe de l'invention lorsqu'il est employé en barbotine dans l'eau avec un dispersant donne des barbotines aqueuses à extrait sec d'au moins 35%. Les dispersants utilisables peuvent être choisis notamment parmi les esters phosphoriques et phosphoniques, les naphtalènes sulfoniques, les polyols, les polyvinylalcools. Cet extrait sec est mesuré de la manière suivante : On met en solution dans l'eau une quantité de dispersant (TRITON X100) déterminée en fonction de la masse de la poudre employée pour le test et de sa surface spécifique. On utilise ici 0,2% en masse de dispersant par m2 de surface de poudre et par gramme de poudre. Pour une surface de 27 m2/g et pour une quantité de poudre utilisée évaluée à environ 0,1 g , on emploie 0,54% en poids de dispersant dans l'eau.

On verse la poudre dans la solution en agitant aux ultrasons. On note l'instant où la poudre prend en masse, ce qui se produit de manière assez brutale.

Le pourcentage d'extrait sec est le pourcentage de solide dans la masse de barbotine la plus concentrée obtenue.

Il faut aussi noter ici que les barbotines obtenues à partir de ces produits présentent une bonne stabilité, elles ne sédimentent que lentement. On peut atteindre des stabilités d'au moins huit jours.

De plus, en pressage colloïdal, c'est-à-dire en partant d'une poudre dispersée dans une barbotine puis en la filtrant sous une pression de plusieurs bars, on obtient des densités d'au moins 50%, plus particulièrement d'au moins 55% de la densité théorique contre 35% maximum dans le cas d'un produit graphitique. Il en est de même en pressage classique.

Un deuxième cas correspond aux produits appelés pour le reste de la description "produits hydrophiles".

Le pH de ces produits est déterminé dans les mêmes conditions que celles décrites pour les produits hydrophobes. Ce pH est inférieur à 8, de préférence d'au plus 7,5.

Sans vouloir non plus être lié par une théorie, la chimie de surface de ces produits pourraît être la conséquence de la présence de quantités importantes de groupements hydroxyles à la surface du produit. Les spectres infrarouges de ces produits montrent la présence de groupements OH.

Ces produits présentent par ailleurs une tension de surface modérée, c'est-à-dire inférieure à 40 dyne-cm$^{-1}$.

Enfin ces produits sont mouillés par l'eau. Ceci peut être intéressant pour des applications où un bon mouillage par l'eau est important.

On notera enfin que comme pour les produits hydrophobes, en pressage classique, on peut obtenir aussi des densités d'au moins 50%, voire au moins 55% de la densité théorique.

Le procédé préparation du nitrvre de bore de l'invention va maintenant être décrit.

La caractéristique essentielle de ce procédé réside dans le fait que le nitrure de bore subit une calcination sous vide.

La température de calcination est généralement d'au moins 1400°C, elle est habituellement comprise entre 1500 et 1900°C.

La durée du palier de calcination est généralement de quelques heures. On a noté que la pureté en oxygène du produit ainsi traité augmentait avec la température et la longueur du traitement de calcination.

Bien entendu, il est préférable de travailler sous un vide le plus poussé possible. Toutefois, le procédé de l'invention peut déjà être mis en oeuvre sous un vide dit "vide primaire" c'est-à-dire correspondant à une pression d'environ 10 mm à 1 mm de mercure. Selon un mode de réalisation préférentiel de l'invention, on opère sous vide dynamique.

L'obtention du produit hydrophobe ou hydrophile dépend bien entendu des conditions de la calcination.

Sans vouloir encore une fois être lié par une théorie, il semblerait que les produits obtenus soient d'autant plus hydrophobes, ou d'autant moins hydrophiles, que l'élimination d'anhydride borique $B_2O_3$ soit plus poussée. Cet anhydride borique provient de l'hydrolyse à l'air humide du nitrure de bore avant le traitement.

D'une manière générale, on peut dire que l'on obtiendra d'autant plus facilement le produit hydrophobe si l'on travaille dans les conditions suivantes :

- les températures élevées, par exemple au moins 1600°C

- les temps de traitement élevés, par exemple au moins deux heures
- un vide poussé.

Par ailleurs, à condition de traitement identique, on formera d'autant plus facilement du produit hydrophobe que la teneur en oxygène du produit de départ est faible.

Au contraire, les températures plus faibles, par exemple comprises entre 1400 et 1600° C, les temps de traitement plus courts par exemple inférieurs à deux heures, les vides moins poussés favoriseront l'obtention de produits hydrophilés.

En ce qui concerne la préparation du nitrure de bore soumis au traitement de calcination, on peut utiliser tout mode de synthèse connu tel que le chauffage d'un mélange de borax-urée dans l'ammoniac, le traitement par l'ammoniac de l'acide borique ou d'un mélange d'oxyde de bore et de phosphate de calcium, ou le chauffage d'acide borique et d'un composé nitré type urée, mélamine par exemple. Ce mode de synthèse sera choisi dans la mesure où il conduit à un produit amorphe ou turbostratique. La calcination sous vide permet de conserver cette structure.

Comme mode de synthèse préféré, notamment pour les produits substantiellement exempts de carbone, on peut mentionner la synthèse, notamment en phase gazeuse, à partir d'un hydrure ou d'un halogénure de bore tel que $BCl_3$ et d'ammoniac qui conduit à des particules sphériques, submicroniques de nitrure de bore amorphe.

Il est à noter que selon une variante intéressante de l'invention on peut faire subir au nitrure de bore un broyage à sec ou une centrifugation. Ce traitement augmente la densité tassée du produit.

Ce broyage ou cette centrifugation a pour but de désagglomérer le produit sans toutefois modifier la granulométrie des particules précitées.

Un tel traitement peut être effectué sur le nitrure de bore avant calcination ou après calcination. Selon une autre variante préférée on peut faire subir au produit deux broyages ou centrifugations l'un avant et l'autre après la calcination.

Le broyage peut se faire par tout moyen connu par exemple en utilisant un broyeur à billes ou à jet d'air. Le broyage ou la centrifugation sont conduits, notamment dans le cas où ils ont lieu après la calcination, habituellement jusqu'à ce que l'on ne remarque plus d'augmentation de la densité tassée à sec du produit.

Des exemples concrets mais non limitatifs de l'invention vont maintenant être donnés.

### Exemple n° 1

400 g de nitrure de bore submicronique de morphologie sphérique (diamètre des grains = 0,1 à 0,2 microns) obtenus par réaction de $BCl_3$ sur $NH_3$ à 600° C sont calcinés dans un four graphite. Le traitement est effectué sous vide dynamique inférieur à 0,5 mbar. On monte en température jusqu'à 1600° C, où l'on reste deux heures en palier. Avant calcination, le produit contenait 9 % d'oxygène. Après calcination, il n'en contient plus que 2,5 %. La morphologie sphérique du produit ainsi que la taille des particules de départ sont conservées. Comme cela apparaît sur la figure 1, le produit présente en diffraction X deux larges pics de forme caractéristique correspondant à la structure hexagonale. Il s'agit donc de nitrure de bore turbostratique. Après une heure de broyage à sec, au TURBULA, dans un récipient en téflon, en présence de 300 g environ de galets de SIALON, le produit présente les caractéristiques suivantes :
- densité absolue de la poudre = 1,68 g/$cm^3$
- densité tassée à sec = 0,37 g/$cm^3$
- densité crue de la pièce formée après pressage colloïdal à 20 bars = 50% de la densité théorique
- extrait sec maximal d'une barbotine aqueuse = 36 %
- surface spécifique = 27 $m^2$/g.
- diamètre des grains = 0,1 à 0,2 micron
- Lc = 2 nm
- La = 3,3 nm

Il s'agit d'un produit hydrophobe de pH égal à 8 et de tension de surface comprise entre 50,5 et 58,3 dyne.$cm^{-1}$. Le pH est déterminé selon la méthode indiquée dans la description.

Le produit est stable vis-à-vis de l'eau. Cette stabilité est appréciée de la manière suivante : On pèse 100 mg de nitrure de bore et on les ajoute à 10 ml d'eau épurée dans un creuset en verre. Le pH de l'eau est de 4,5 avant l'introduction du nitrure de bore.

Après 1 heure et 45 minutes, le pH est toujours de 4,5.

Si on recommence la même expérience avec le nitrure de bore de départ c'est-à-dire non calciné, on observe qu'en moins de 5 minutes le pH passe de 4,5 à 9,5.

### Exemple n° 2 comparatif

400 g de nitrure de bore appartenant au même lot que ceux de l'exemple précédent sont calcinés avec le même cycle thermique en atmosphère d'azote confinée (pN2 = 800 mb). Le produit contient 8 % d'oxygène après calcination et se présente sous forme de plaquettes de structure graphitique et submicronique. Le spectre rayon X du produit correspond à la figure 2. Après un traitement de broyage identique au précédent, il présente les caractéristiques suivantes :
- densité absolue de la poudre = 2,13 g/$cm^3$

- densité tassée à sec = 0,27 g/cm$^3$
- densité de la pièce crue après pressage colloïdal à 20 bars = 28% de la densité théorique
- extrait sec maximal d'une barbotine aqueuse = 28 %
- surface spécifique = 32 m$^2$/g.
- Lc = 31,5 nm
- La = 72,5 nm

Le pH de ce produit est de 8,6.

## Exemple n° 3

5 g de la même souche de nitrure de bore que dans les exemples précédents sont calcinés sous vide pendant 10 h à 1550°C. La structure turbostratique est conservée. La teneur en oxygène n'est plus que de 1,4%. La densité tassée à sec est identique à celle du produit de l'exemple 1.

## Exemple n° 4

900 g de nitrure de bore submicronique de morphologie shérique du type de l'exemple 1, mais contenant 5,8% d'oxygène dont 5% d'oxygène boroxolique sont traités dans les mêmes conditions de calcination et de broyage que dans l'exemple 1.

Après calcination, la teneur en oxygène du produit est de 5,5%.

Il s'agit d'un nitrure de bore turbostratique. Ses caractéristiques sont les suivantes:
- surface spécifique = 25 m2/g
- densité tassée à sec. 0,41 g/cm3
- densité absolue = 1,65 g/cm3
- diamètre des grains = 0,1 à 0,2µm
- densité de la pièce crue après pressage colloïdal à 20 bars = 60% de la densité théorique
- Lc = 2,5 µm
- La = 3,5 µm

Il s'agit d'un produit hydrophobe de pH égal à 9 et de tension de surface comprise entre 50,5 et 58,3 dyne.cm$^{-1}$.

## Exemple n° 5

50 g de nitrure de bore submicronique de morphologie sphérique du type du produit de départ de l'exemple 1 mais contenant initialement 17% d'oxygène dont 2,8% d'oxygène boroxolique, sont calcinés 2 heures à 1800°C. Le produit obtenu a une teneur en oxygène de 1,1%. Il s'agit de nitrure de bore turbostratique. Il présente les caractéristiques suivantes :
- densité absolue = 1,83 g/cm3
- Lc = 7,5 nm
- La = 9,5 nm

Il s'agit d'un produit hydrophobe de pH égal à 8.

## Exemple n° 6

On part d'un nitrure de bore du même type que celui de départ de l'exemple 1 mais contenant 17% d'oxygène.

On lui fait subir une calcination de deux heures à 1600°C sous un vide de 5 mbar.

On obtient un produit turbostratique à morphologie sphérique ayant les caractéristiques suivantes :
- densité absolue = 1,55 g/cm3
- surface spécifique = 25 m2/g
- Lc = 3 nm
- La = 5 nm

Sa teneur en oxygène est de 3,4%.

Il s'agit d'un produit hydrophile à pH de 7,25 et présentant une tension de surface comprise entre 33 et 37,5 dyne.cm$^{-1}$.

## Revendications

1. Nitrure de bore caractérisé en ce qu'il présente une structure amorphe ou turbostratique, une teneur en oxygène d'au plus 10 % et en ce qu'il est exempt de carbone.

2. Nitrure de bore selon la revendication 1, caractérisé en ce qu'il présente une morphologie sphérique.

3. Nitrure de bore caractérisé en ce qu'il présente une structure amorphe ou turbostratique et une morphologie sphérique.

4. Nitrure de bore selon la revendication 3, caractérisé en ce qu'il présente une teneur en oxygène d'au plus 10 %.

5. Nitrure de bore selon l'une des revendications précédentes, caractérisé en ce qu'il présente une teneur en oxygène d'au plus 5 % plus particulièrement d'au plus 1,5 %.

6. Nitrure de bore selon l'une des revendications précédentes, caractérisé en ce qu'il est constitué de particules submicroniques, notamment de taille d'au plus 0,3µm.

7. Nitrure de bore selon l'une des revendications précédentes, caractérisé en ce qu'il présente une densité tassée d'au moins 0,35 g/cm$^3$.

8. Nitrure de bore selon l'une des revendications précédentes, caractérisé en ce qu'il est stable dans l'eau.

9. Nitrure de bore selon l'une des revendications 3 à 8, caractérisé en ce qu'il est exempt de carbone

10. Nitrure de bore selon l'une des revendications précédentes, caractérisé en ce qu'il présente une teneur en élément métallique inférieure à 100 p.p.m.

11. Nitrure de bore selon l'une des revendications 2 à 10, caractérisé en ce qu'il est constitué de particules sphériques, dont les cristallites présentent un Lc et un La d'au plus 15 nm, plus particulièrement d'au plus 10 nm.

12. Nitrure de bore selon l'une des revendications précédentes, caractérisé en ce qu'il présente un pH d'au moins 8.

13. Nitrure de bore selon la revendication 12, caractérisé en ce qu'il contient des ions ammonium.

14. Nitrure de bore selon l'une des revendications 12 ou 13, caractérisé en ce qu'il présente une tension de surface supérieure à 40 dyne.cm$^{-1}$.

15. Nitrure de bore selon l'une des revendications 1 à 11, caractérisé en ce qu'il présente un pH inférieur à 8.

16. Nitrure de bore selon la revendication 15, caractérisé en ce qu'il présente une tension de surface inférieure à 40 dyne.cm$^{-1}$.

17. Procédé de préparation d'un nitrure de bore selon l'une des revendications précédentes, caractérisé en ce qu'après la synthèse du nitrure de bore on soumet celui-ci à une calcination sous vide.

18. Procédé selon la revendication 17, caractérisé en ce qu'on effectue la calcination à une température d'au moins 1400°C.

19. Procédé selon l'une des revendications 17 ou 18, caractérisé en ce qu'on soumet à la calcination un nitrure de bore synthétisé en phase gazeuse.

20. Procédé selon l'une des revendications 17 à 19, caractérisé en ce qu'on fait subir un broyage ou une centrifugation au nitrure de bore avant et/ou après la calcination.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 288 645 (KAWASAKI STEEL CORP.)<br>* page 7, lignes 18,19,51-57; exemples 17-20 * | 1,4,5, 17,18 | C 01 B 21/064 |
| A | FR-A-1 310 262 (DU PONT DE NOMOURS)<br>* résumé * | 1,17 | |
| A | PATENT ABSTRACTS OF JAPAN<br>vol. 10, no. 303 (C-378)(2359), 16 octobre 1986; & JP-A-61117107 (TOSHIBA TUNGALOY CO. LTD.) 04.06.1986 | 1,2 | |
| A | PATENT ABSTRACTS OF JAPAN<br>vol. 13, no. 101 (C-574)(3449), 9 mars 1989; & JP-A-63277571 (TOSHIBA CORP.) 15.11.1988 | 17 | |

|  |  |  | DOMAINES TECHNIQUES RECHERCHES (Int. Cl.5) |
|---|---|---|---|
|  |  |  | C 01 B 21/064<br>C 04 B 35/58 |

Le présent rapport a été établi pour toutes les revendications

| Lieu de la recherche | Date d'achèvement de la recherche | Examinateur |
|---|---|---|
| BERLIN | 25-07-1990 | CLEMENT J.P. |

EPO FORM 1503 03.82 (P0402)